# EUROPÄISCHE PATENTSCHRIFT

(11) **EP 2 161 431 B1**
(45) Veröffentlichungstag und Bekanntmachung des Hinweises auf die Patenterteilung: **26.04.2017**
(21) Anmeldenummer: 09009509.2
(22) Anmeldetag: 22.07.2009
(51) Int. Cl.: F02C 7/04, F02C 7/20, B64C 11/14

(54) **Fluggasturbinen-Einlaufkonus**
Inlet nose cone for an aircraft gas turbine powerplant
Cône d'entrée d'une turbine à gaz pour aéronef

(30) Priorität: 03.09.2008 DE 102008045546
(43) Veröffentlichungstag der Anmeldung: 10.03.2010
(73) Patentinhaber: Rolls-Royce Deutschland Ltd & Co KG, 15827 Blankenfelde-Mahlow (DE)
(72) Erfinder: Dieling, Martina, 15834 Rangsdorf (DE)
(74) Vertreter: Hoefer & Partner Patentanwälte mbB

(56) Entgegenhaltungen:
- EP-A2- 1 016 588
- DE-A1-102005 013 421
- DE-A1-102006 011 513
- GB-A- 2 363 170
- US-A- 2 371 801

## Beschreibung

Die Erfindung betrifft einen Einlaufkonus für ein Gasturbinentriebwerk, insbesondere Turbofan-Gasturbinentriebwerk, der einen konusförmigen Körper und einen mit diesem verbundenen Haltering umfasst, welcher an einer Fanscheibe lagerbar ist. Die Anordnung eines Einlaufkonus auf der Einlassseite eines Gasturbinentriebwerks ist prinzipiell bekannt. Derartige, zumeist als Kegel gestaltete Einlaufkonusse sollen zum einen eine möglichst verwirbelungsfreie Einlaufströmung in das Triebwerk bewirken und zum anderen durch auftreffende Fremdkörper bedingte Schäden (Vogelschlag) begrenzen.

Aus der GB 2 363 170 A ist ein Fluggasturbinen-Einlaufkonus vorbekannt, welcher mit seinem rückseitigen Endbereich gegen eine axiale Anlagefläche anliegt und welcher mit seinem rückseitigen Endbereich radial innenliegend an einem ringförmigen Bauteil zentriert ist.

Die DE 10 2005 0123421 A1 offenbart einen Einlaufkonus, bei welchem der rückseitige Endbereich ebenfalls an einem Zentrierbund anliegt und in axialer Richtung durch seine axiale Anlagefläche am Adaptorring fixiert wird.

Die EP 1 016 588 A2 zeigt einen Einlaufkonus oder Spinner, welcher mittels axialer und radialer Anlageflächen gelagert ist. Zur Abdeckung dieses Lagerbereichs ist eine zusätzliche Verkleidung vorgesehen, welche weder funktionell noch baulich mit dem Einlaufkonus gleichzusetzen ist, sondern lediglich den Lagerungsbereich des Einlaufkonus ringförmig abdeckt. Die Befestigung dieses Verkleidungsrings erfolgt mittels flexibler Laschen.

Aus der US 2 371 801 A ist eine Konstruktion vorbekannt, bei welcher im Innenraum des Einlaufkonus bzw. Spinner an seinem hinteren Bereich eine Lagerkonstruktion mit einzelnen Lagerelementen angeflanscht ist. Diese Lagerelemente wirken jeweils mit einem Befestigungsbauteil an der Propellerwelle zusammen. Die Lagerung erfolgt dabei ausschließlich axial unter Verwendung von radialen Anlageflächen.

Der Erfindung liegt die Aufgabe zugrunde, einen Einlaufkonus der eingangs erwähnten Art so auszubilden, dass der Herstellungs- und Montageaufwand gering und eine sichere

Befestigung sowie ein störungsfreier Betrieb gewährleistet sind und das Gewicht reduziert wird.

Erfindungsgemäß wird die Aufgabe mit einem gemäß den Merkmalen des Patentanspruchs 1 ausgebildeten Einlaufkonus gelöst. Aus den Unteransprüchen ergeben sich vorteilhafte Weiterbildungen und zweckmäßige Ausgestaltungen der Erfindung.

Erfindungsgemäß ist somit ein Fluggasturbineneinlaufkonus geschaffen, welcher auf optimierte Weise ausgestaltet und gelagert werden kann.

Erfindungsgemäß erfolgt die Lagerung über einen konusförmigen Lagerbereich, der somit eine optimale Zentrierung ermöglicht. Es erfolgt somit eine stabile, sichere Anbindung des Einlaufkonus an einer Fan-Rotorscheibe bzw. einem mit dieser verbundenen Rückhaltering.

Durch die erfindungsgemäß vorgesehene Ausgestaltung ist es möglich, den gesamten Einlaufkonus in einfacher und wirksamer Weise auszuwuchten, nachdem dieser montiert wurde.

Auch die Montierbarkeit ist erfindungsgemäß erheblich vereinfacht worden.

Die erfindungsgemäße Ausgestaltung ermöglicht es, relativ konstante und geringe Wanddicken vorzusehen und eine automatisierte Herstellung, beispielsweise über ein Wickelverfahren zu ermöglichen.

Erfindungsgemäß ist es besonders vorteilhaft, dass die Verbindung zwischen dem Lagerbereich des Einlaufkonus-Körpers und dem Trägerbereich bzw. der Lagerfläche des Halterings mittels Schrauben erfolgt, deren Achsen jeweils im Wesentlichen senkrecht zur Mantelfläche des Lagerbereichs des Einlaufkonus-Körpers angeordnet sind. Hierdurch erfolgt eine optimierte Kraftübertragung sowie eine besonders sichere Befestigung, welche zusätzlich zu einer stabilen, zentrierten Lage des Einlaufkonus beiträgt, insbesondere, da dessen konische Innenfläche (Lagerbereich) parallel zur äußeren Konusfläche des Einlaufkonus-Körpers angeordnet ist.

Durch die erfindungsgemäße Ausgestaltung ist es weiterhin möglich, die Verbindungselemente (Schrauben) versenkt bezüglich der Außenfläche des Einlaufkonus-Körpers anzubringen. Dies dient zu einer Strömungsoptimierung und verhindert den Eisansatz.

Zur vereinfachten Montage und Zentrierung des Einlaufkonus kann es günstig sein, Passstifte vorzusehen, die während der Montage eine Kippsicherung bilden, so dass der Einlaufkonus relativ zu dem Haltering gehaltert und zentriert werden kann, bevor die Schrauben (Verbindungselemente) eingesetzt und befestigt werden.

Die Zentrierung des Einlaufkonus kann dabei beispielsweise über drei derartige Positionierstifte oder Passstifte erfolgen, die in Umfangsrichtung eine kleine Toleranz aufweisen. Hierdurch ergibt sich eine Minimierung der Winkelabweichung. Durch die konische Lagefläche erfolgt erfindungsgemäß eine weitere Optimierung und Zentrierung des Einlaufkonus.

In besonders günstiger Weise ist es erfindungsgemäß möglich, den Einlaufkonus auszuwuchten. Dabei können Wuchtgewichte eingesetzt werden, die mit den Verbindungselementen/Schrauben verschraubt werden. Somit kann eine Wuchtung des Einlaufkonus von außen erfolgen, ohne dass die Notwendigkeit besteht, diesen nochmals zu demontieren. Hierdurch kann darauf verzichtet werden, die axiale Länge des Einlaufkonus reproduzierbar auszugestalten.

Weiterhin ist es erfindungsgemäß vorteilhaft, dass die Verwendung von Schrauben als Verbindungselemente bzw. die Tolerierung der Verbindungselemente auch unterschiedliche axiale Positionen der Bauteile zueinander, beispielsweise Toleranzen der Bauteile sowie eine thermische Ausdehnung, berücksichtigen kann.

Der erfindungsgemäße Einlaufkonus zeichnet sich durch eine Reihe erheblicher Vorteile aus. Durch die einstückige Ausgestaltung des Körpers und die Möglichkeit, diesen aus Faserverbundwerkstoff zu fertigen, ergibt sich ein stabiler Aufbau mit geringem Gewicht. Durch die erfindungsgemäße Konstruktion ist die Lagerungsmöglichkeit optimiert, so dass sich im Wesentlichen keine Wanddickenunterschiede ergeben, insbesondere nicht im Einspannbereich. Dieser ist vielmehr mit einem im Wesentlichen gleichbleibenden Wandquerschnitt oder einer im Wesentlichen gleichbleibenden Wanddicke versehen, so dass eine zerstörungsfreie Werkstoffprüfung des Einlaufkonus möglich ist.

Erfindungsgemäß ist es weiterhin möglich, das Buchsendesign zu verbessern und eine optimierte Zentrierung des Einlaufkonus sicherzustellen.

Im Folgenden wird die Erfindung anhand von Ausführungsbeispielen in Verbindung mit der Zeichnung beschrieben. Dabei zeigt:
- Fig. 1: eine vereinfachte schematische Darstellung eines Turbofan-Gasturbinentriebwerks mit einem dem Fan zugeordneten Einlaufkonus;
- Fig. 2: eine Axial-Teilschnittansicht eines ersten Ausführungsbeispiels der Erfindung,
- Fig. 3-5: vergrößerte Darstellungen der Lagerungsbereiche gemäß dem Ausführungsbeispiel der Fig. 2,
- Fig. 6: eine vergrößerte Teilansicht der Darstellung gemäß Fig. 5,
- Fig. 7: eine Darstellung der konusförmigen Auflagefläche, um einen Winkelbereich versetzt zu der Darstellung der Fig. 3-6,
- Fig. 8: eine alternative Ausgestaltung der Anordnung der Passstifte, und
- Fig. 9: eine Frontansicht des erfindungsgemäßen Halterings.

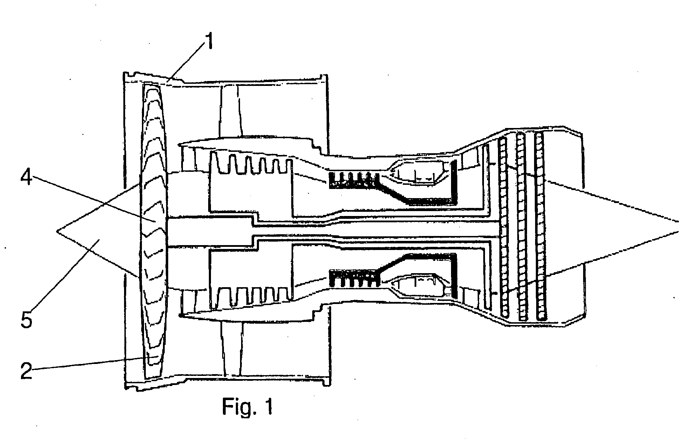

Das in Fig. 1 dargestellte Turbofan-Gasturbinentriebwerk umfasst einen in einem Fangehäuse 1 angeordneten, von der Niederdruckturbine über die Niederdruckwelle angetriebenen Fanrotor 2 mit an einer Fanscheibe angebrachten Fanschaufeln 4, weiterhin ist an dem Haltering 3 ein einstückig ausgebildeter Einlaufkonus-Körper 5 dargestellt. Der Einlaufkonus-Körper 5 sorgt aufgrund seiner glatten konischen Ausbildung zum einen für eine verwirbelungsfreie Luftzufuhr zum Fanrotor 2. Der beispielsweise in einem maschinellen Wickelverfahren (siehe DE 10 2006 011 513 A1) aus einem Faserverbundmaterial gefertigte Einlaufkonus-Körper 5 ist so ausgebildet und befestigt, dass die durch Vogelschlag auf diesen ausgeübten Kräfte axial über den Haltering 3 abgeleitet werden. Ein auf den Einlaufkonus-Körper 5 auftreffender Vogel wird zudem durch die Drehbewegung des Einlaufkonus nach außen, d.h., von dem nachfolgenden Niederdruckverdichter weg, geschleudert.

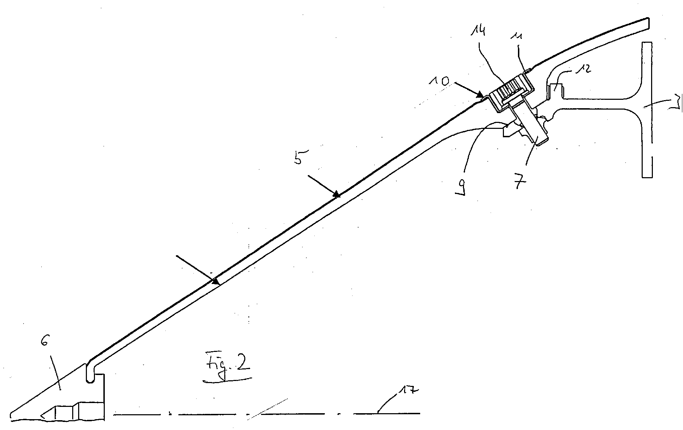

Die Fig. 2 zeigt eine Teil-Schnittansicht eines ersten Ausführungsbeispiels des Einlaufkonus-Körpers 5, der mit einer Konusspitze 6 versehen sein kann. Der Einlaufkonus-Körper 5 weist eine im Wesentlichen gleichbleibende Wanddicke auf und ist beispielsweise nach einem Verfahren gemäß DE 10 2006 011 513 A1 gefertigt.

An seinem rückwärtigen Ende ist der Einlaufkonus-Körper 5 an einem Haltering 3 an einer konusförmigen Auflage gelagert, welche zur Zentrierung und axialen Sicherung dient. Die Verbindung von Einlaufkonus-Körper 5 zum Haltering 3 bewirkt keine vertikale Anschlagfläche und keine radiale Zentrierung. Die Befestigung erfolgt mittels Befestigungsschrauben 7, deren Köpfe jeweils in einer Ausnehmung 10 versenkt angeordnet sind, so dass sich eine glatte Außenfläche ergibt. Die Ausnehmungen für die Befestigungsschrauben 7 sind durch ein napfartiges Einsatzstück 11 geschützt.

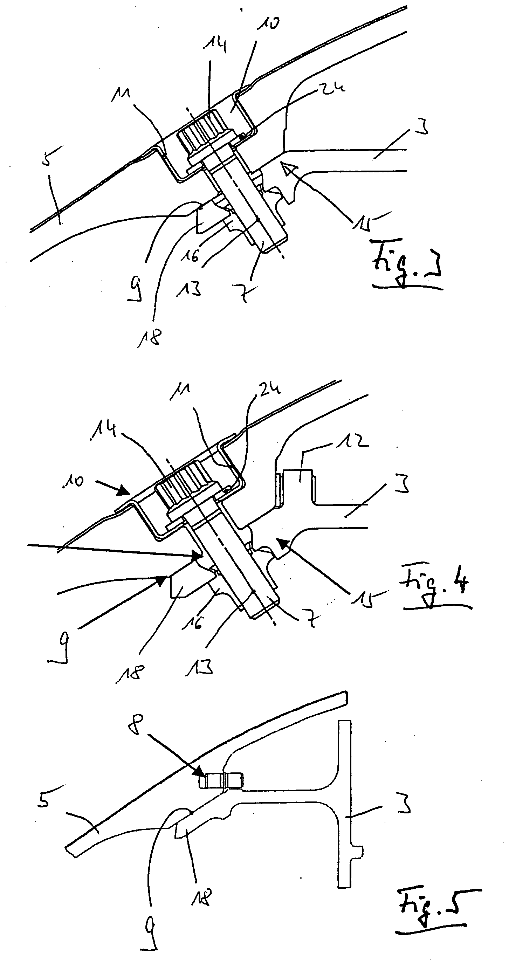

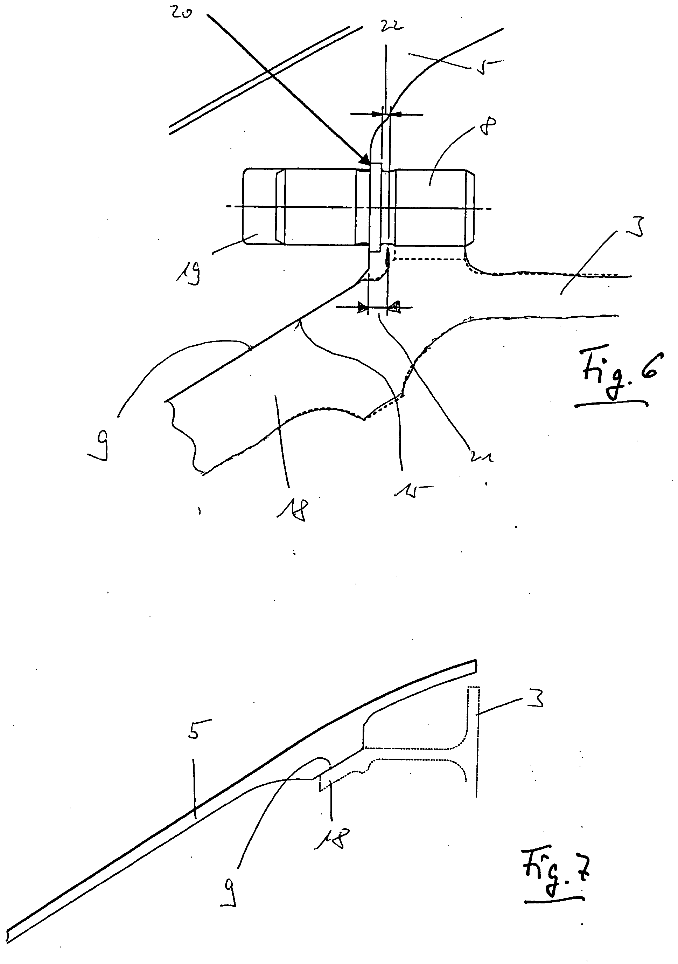

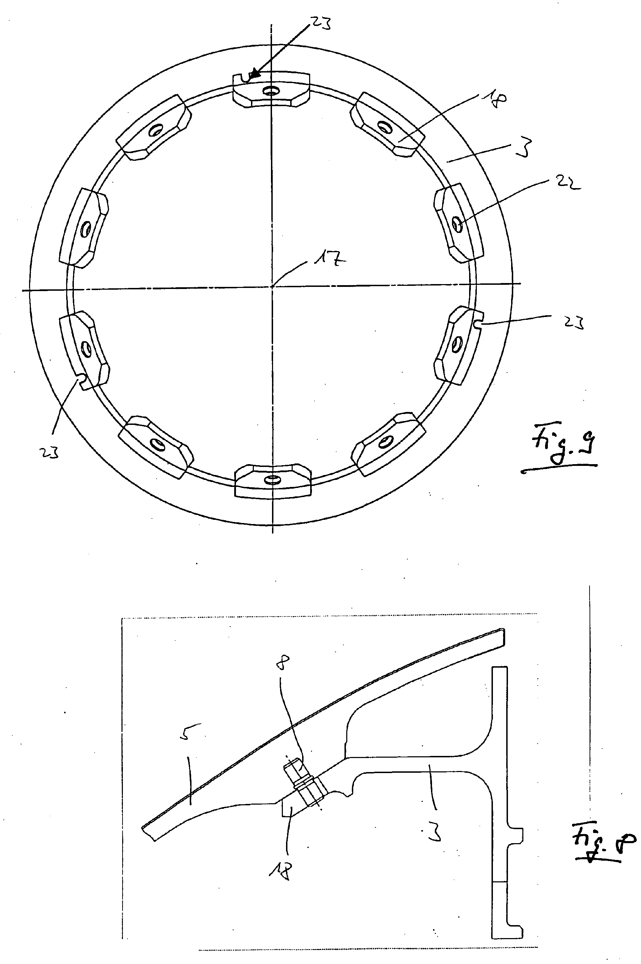

Der Haltering 3 weist ein Zentrierelement 12 auf. Mittels Passstift 8 (Fig.5 und 6) erfolgt eine Zentrierung während des Montagevorganges . Die Stifte können axial oder in einem Winkel angeordnet sein. Auf die Darstellung des Zentrierelements 12 wurde in Fig. 9 verzichtet.

Die Fig. 3-5 zeigen weitere Details der Erfindung. Dabei ist insbesondere ersichtlich, dass die Befestigungsschrauben 7 so angeordnet sind, dass deren Achse 13 im Wesentlichen senkrecht zur konischen Außenfläche des Einlaufkonus-Körpers 5 angeordnet ist. Die Köpfe 14 der Schrauben 7 sind jeweils so in der Ausnehmung 10 angeordnet, dass sie nicht über die Außenkontur des Einlaufkonus-Körpers 5 überstehen. Die Einsatzstücke 11 sind napfförmig ausgebildet und weisen einen Rand auf, welcher gegen die Außenfläche des Einlaufkonus-Körpers 5 anliegt, ohne jedoch überzustehen. Auf diese Weise wird eine sichere Kraftübertragung über die gesamte Materialdicke des Einlaufkonus sichergestellt.

Der Haltering 3 weist verstärkte und starre Lagerflächen 15 auf, gegen welche der Einlaufkonus-Körper 5 anliegt, so wie dies insbesondere in den Fig. 3 und 4 dargestellt ist. Das Gewinde der Schraube 7 ist in Eingriff mit einem Mutternelement 16. Die Fig. 5 zeigt eine um einen vorgegebenen Winkelbetrag um die Mittelachse 17 des Einlaufkonus-Körpers 5 gedrehte Position, so dass die Anordnung von axialen Passstiften 8 ersichtlich ist (siehe Fig. 6).

Die Fig. 6 zeigt in vergrößerter Darstellung die Anordnung der Passstifte 8. Diese sind jeweils in einer axialen Ausnehmung 19 (Passbohrung) mit geringer Toleranz angeordnet und liegen mit einer Schulter 20 gegen eine axiale Anschlagfläche des Einlaufkonus-Körpers 5 an. Mit dem Bezugszeichen 21 ist ein Spalt zwischen gegenüberliegenden, benachbarten Flächen des Einlaufkonus-Körpers 5 und des Halterings 3 dargestellt. Das Bezugszeichen 22 bezeichnet einen Spalt zwischen dem Passstift 8 und der Axialfläche des Halterings 3. Dieser ist, wie in Fig. 4 gezeigt, mit einem Zentrierring 12 versehen, der der Einfachheit halber in Fig. 6 nicht gezeigt ist.

Die Fig. 7 zeigt ein Ausführungsbeispiel in einer um einen Winkelbereich versetzten Anordnung und verdeutlicht nochmals die ausschließlich auf der konischen Auflage 9 erfolgende Lagerung des Einlaufkonus-Körpers 5.

Die Fig. 8 zeigt eine alternative Ausgestaltung, bei welcher die Passstifte 8 nicht in axialer Richtung, sondern hinsichtlich ihrer Achse im Wesentlichen senkrecht zur Außenfläche des Einlaufkonus-Körper 5 angeordnet sind.

Die Fig. 9 zeigt eine stirnseitige Ansicht des Halterings 3. Dieser weist am Umfang beabstandet einzelne Lagervorsprünge 18 auf, welche starr ausgebildet sind und jeweils mit einer Ausnehmung 22 versehen sind, durch welche die Befestigungsschraube 7 durchführbar ist. Zusätzlich ist dargestellt, dass am Umfang drei Passstifte 8 vorgesehen sind, die jeweils in einer nutartigen Ausnehmung 23 oder in einer Passbohrung des Zentrierrings 12 geführt sind.

Erfindungsgemäß ergibt sich somit eine gewichtsreduzierte und fertigungsoptimierte Ausgestaltung, welche ein robustes Design aufweist und für unterschiedliche Herstellungsverfahren des Einlaufkonus geeignet ist. Dabei ergeben sich vorteilhafterweise wenig Bearbeitungsflächen, wodurch sich die Herstellungskosten weiter verringern.

Durch die Möglichkeit, zur Auswuchtung Wuchtscheiben 24 (als Wuchtgewicht) unter den Schraubenkopf 14 zu legen (siehe Fig. 3 und 4), ergibt sich die Möglichkeit, eine einfache, zeitsparende und kostengünstige Auswuchtung vorzunehmen, ohne den Einlaufkonus demontieren zu müssen. Dies führt auch zu einer erheblichen Zeitersparnis bei der Montage und beim Auswuchten.

### Bezugszeichenliste

- 1: Fan-Gehäuse
- 2: Fan-Rotor
- 3: Haltering
- 4: Fan-Schaufel
- 5: Einlaufkonuskörper
- 6: Konusspitze
- 7: Befestigungsschraube
- 8: Passstift
- 9: Konusförmige Auflage
- 10: Ausnehmung
- 11: Einsatzstück
- 12: Zentrierring
- 13: Schraubenachse
- 14: Schraubenkopf
- 15: Lagerfläche
- 16: Mutternelement
- 17: Mittelachse
- 18: Lagervorsprung
- 19: Axiale Ausnehmung / Passbohrung
- 20: Schulter
- 21: Spalt
- 22,23: Ausnehmung
- 24: Wuchtscheibe/Auswuchtgewicht

## Patentansprüche

1. Fluggasturbinen-Einlaufkonus, mit einem im Wesentlichen konusförmigen, über seine axiale Länge einstückig ausgebildeten Körper (5), mit einem an einer Fan-Rotorscheibe lagerbaren Haltering (3), **dadurch gekennzeichnet, dass** der Haltering (3) einen starr ausgebildeten konusförmigen Trägerbereich mit Lagerflächen (15) aufweist, und der Körper (5) ausschließlich an einem konusförmigen Lagerbereich (9) gegen die Lagerflächen (15) anliegt und dort mit dem konusförmigen Trägerbereich verbunden ist.

2. Fluggasturbinen-Einlaufkonus nach Anspruch 1, **dadurch gekennzeichnet, dass** die Verbindung zwischen dem Lagerbereich (9) und dem Trägerbereich mittels Schrauben (7) erfolgt, deren Achsen (13) jeweils im Wesentlichen senkrecht zur Mantelfläche des Lagerbereichs (9) des Körpers (5) angeordnet sind.

3. Fluggasturbinen-Einlaufkonus nach Anspruch 1 oder 2, **dadurch gekennzeichnet, dass** der Lagerbereich (9) mit einer im Wesentlichen zylindrischen Ausnehmung (10) für ein Verbindungselement (7) versehen ist.

4. Fluggasturbinen-Einlaufkonus nach einem der Ansprüche 1 bis 3, **dadurch gekennzeichnet, dass** der Körper (5) im Bereich seines Lagerbereichs (9) zumindest zu seiner Montage mittels einer Kippsicherung mit dem Haltering (3) gekoppelt ist.

5. Fluggasturbinen-Einlaufkonus nach Anspruch 4, **dadurch gekennzeichnet, dass** die Kippsicherung axial angeordnete, eine Axialbewegung zwischen dem Körper (5) und dem Haltering (3) ermöglichende Passstifte (8) umfasst.

6. Fluggasturbinen-Einlaufkonus nach einem der Ansprüche 4 oder 5, **dadurch gekennzeichnet, dass** die Kippsicherung in einem Winkel von 0° bis 90° zu einer Längsachse des Körpers (5) angeordnet ist.

7. Fluggasturbinen-Einlaufkonus nach Anspruch 6, **dadurch gekennzeichnet, dass** der Haltering (3) in Umfangsrichtung segmentiert ausgebildet ist und axial ausgerichtete Lagervorsprünge (18) aufweist, die mit den Lagerbereichen (9) des Körpers (5) verbunden sind.

8. Fluggasturbinen-Einlaufkonus nach einem der Ansprüche 1 bis 7, **dadurch gekennzeichnet, dass** am Lagerbereich (9) des Körpers (5) Auswuchtgewichte (24) anbringbar sind.

9. Fluggasturbinen-Einlaufkonus nach einem der Ansprüche 1 bis 8, **dadurch gekennzeichnet, dass** der Körper (5) als einstückiges, gewickeltes Flechtwerk aus sich kreuzenden und gegenseitig überdeckenden Wickellagen, die aus im Wechsel und parallel zueinander angeordneten, aneinander angrenzenden Glasfaser- und Kohlefasersträngen ähnlicher Stärke bestehen und in ein Harz eingebettet sind.

10. Fluggasturbinen-Einlaufkonus nach einem der Ansprüche 1 bis 8, **dadurch gekennzeichnet, dass** dieser aus einer Titanlegierung besteht.

11. Fluggasturbinen-Einlaufkonus nach einem der Ansprüche 1 bis 8, **dadurch gekennzeichnet, dass** dieser aus Prepreg besteht.

12. Fluggasturbinen-Einlaufkonus nach einem der Ansprüche 1 bis 8, **dadurch gekennzeichnet, dass** dieser aus einer Aluminiumlegierung besteht.

13. Fluggasturbinen-Einlaufkonus nach einem der Ansprüche 1 bis 12, **dadurch gekennzeichnet, dass** der Körper (5) und der Haltering (3) während der Montage ein axiales Spiel aufweisen.

## Claims

1. Intake cone for an aircraft gas turbine with an essentially conical body (5) designed as one piece over its axial length, with a retaining ring (3) that can be borne on a fan rotor disk, **characterized in that** the retaining ring (3) has a rigidly designed conical supporting area with bearing surfaces (15) and that the body (5) abuts the bearing surfaces (15) exclusively on a conical bearing area (9) and is connected there to the conical supporting area.

2. Intake cone for an aircraft gas turbine in accordance with Claim 1, **characterized in that** the connection between the bearing area (9) and the supporting area is made by means of bolts (7), whose axes (13) are essentially perpendicular to the enveloping surface of the bearing area (9) of the body (5).

3. Intake cone for an aircraft gas turbine in accordance with Claim 1 or 2, **characterized in that** the bearing area (9) is provided with an essentially cylindrical recess (10) for a connecting element (7).

4. Intake cone for an aircraft gas turbine in accordance with one of the Claims 1 to 3, **characterized in that** the body (5) - at least for assembly purposes - is coupled with the retaining ring (3) in the zone of its bearing area (9) by means of an anti-tilting device.

5. Intake cone for an aircraft gas turbine in accordance with Claim 4, **characterized in that** the anti-tilting device includes axially arranged dowel pins (8), which provide for an axial movement between the body (5) and the retaining ring (3).

6. Intake cone for an aircraft gas turbine in accordance with one of the Claims 4 or 5, **characterized in that** the anti-tilting device is arranged at an angle of 0° to 90° to a longitudinal axis of the body (5).

7. Intake cone for an aircraft gas turbine in accordance with Claim 6, **characterized in that** the retaining ring (3) is circumferentially segmented and provided with axially oriented bearing protrusions (18), which are connected to the bearing areas (9) of the body (5).

8. Intake cone for an aircraft gas turbine in accordance with one of the Claims 1 to 7, **characterized in that** balancing weights (24) can be fitted in the bearing area (9) of the body (5).

9. Intake cone for an aircraft gas turbine in accordance with one of the Claims 1 to 8, **characterized in that** the body (5) is a one-piece interlace wound of mutually crossing and covering winding layers, consisting of alternately adjacent and parallel glass fiber strands and carbon fiber strands of equal thickness, which are embedded in a resin.

10. Intake cone for an aircraft gas turbine in accordance with one of the Claims 1 to 8, **characterized in that** the intake cone is made of a titanium alloy.

11. Intake cone for an aircraft gas turbine in accordance with one of the Claims 1 to 8, **characterized in that** the intake cone is made of prepreg.

12. Intake cone for an aircraft gas turbine in accordance with one of the Claims 1 to 8, **characterized in that** the intake cone is made of an aluminum alloy.

13. Intake cone for an aircraft gas turbine in accordance with one of the Claims 1 to 12, **characterized in that** the body (5) and the retaining ring (3) feature an axial clearance during assembly.

## Revendications

1. Cône d'entrée d'une turbine à gaz aéronautique ayant un corps (5) pour l'essentiel en forme de cône et formé d'une seule pièce sur sa longueur axiale et doté d'une bague de fixation (3) pouvant être montée sur un disque de rotor de soufflante, **caractérisé en ce que** ladite bague de fixation (3) dispose d'une zone support rigide en forme de cône avec des surfaces d'appui (15) et que le corps (5) jouxte, exclusivement au niveau d'une zone d'appui conique (9), lesdites surfaces d'appui (15) et y est lié à la zone support en forme de cône.

2. Cône d'entrée d'une turbine à gaz aéronautique selon la revendication n° 1, **caractérisé en ce que** la liaison entre la zone d'appui (9) et la zone support est assurée par des vis (7) dont les axes (13) s'étendent pour l'essentiel perpendiculairement à la surface enveloppante de la zone d'appui (9) du corps (5).

3. Cône d'entrée d'une turbine à gaz aéronautique selon la revendication n° 1 ou n° 2, **caractérisé en ce que** la zone d'appui (9) est pourvue d'une cavité essentiellement cylindrique (10) pour un élément de liaison (7).

4. Cône d'entrée d'une turbine à gaz aéronautique selon une des revendications n° 1 à n° 3, **caractérisé en ce que** le corps (5) est accouplé dans sa zone d'appui (9) - au moins durant son montage - à la bague de fixation (3) au moyen d'un dispositif anti-basculement.

5. Cône d'entrée d'une turbine à gaz aéronautique selon la revendication n° 4, **caractérisé en ce que** le dispositif anti-basculement comporte des goujons (8) disposés en sens axial et permettant un déplacement axial entre le corps (5) et la bague de fixation (3).

6. Cône d'entrée d'une turbine à gaz aéronautique selon une des revendications n° 4 ou n° 5, **caractérisé en ce que** le dispositif anti-basculement est disposé à un angle compris entre 0° et 90° par rapport à un axe longitudinal du corps (5).

7. Cône d'entrée d'une turbine à gaz aéronautique selon la revendication n° 6, **caractérisé en ce que** la bague de fixation (3) est segmentée à sa circonférence et dispose de ressauts d'appui (18) qui sont alignés en direction axiale et liés aux zones d'appui (9) du corps (5).

8. Cône d'entrée d'une turbine à gaz aéronautique selon une des revendications n° 1 à n° 7, **caractérisé en ce que** des masses d'équilibrage (24) peuvent être fixées sur la zone d'appui (9) du corps (5).

9. Cône d'entrée d'une turbine à gaz aéronautique selon une des revendications n° 1 à n° 8, **caractérisé en ce que** le corps (5) est un tressage d'une seule pièce formé par des couches enroulées se croisant et superposées, constituées alternativement par des faisceaux de fibres de verre et de carbone parallèles et jointifs, ayant une épaisseur similaire et enrobés de résine.

10. Cône d'entrée d'une turbine à gaz aéronautique selon une des revendications n° 1 à n° 8, **caractérisé en ce que** celui-ci est constitué d'un alliage de titane.

11. Cône d'entrée d'une turbine à gaz aéronautique selon une des revendications n° 1 à n° 8, **caractérisé en ce que** celui-ci est constitué d'un tissu préimprégné (prépreg).

12. Cône d'entrée d'une turbine à gaz aéronautique selon une des revendications n° 1 à n° 8, **caractérisé en ce que** celui-ci est constitué d'un alliage d'aluminium.

13. Cône d'entrée d'une turbine à gaz aéronautique selon une des revendications n° 1 à n° 12, **caractérisé en ce que** le corps (5) et la bague de fixation (3) présentent un jeu axial durant leur assemblage.
